Europäisches Patentamt

European Patent Office

Office européen des brevets

(11) Veröffentlichungsnummer: **0 399 212 B1**

# (12) EUROPÄISCHE PATENTSCHRIFT

(45) Veröffentlichungstag der Patentschrift:
27.11.91 Patentblatt 91/48

(51) Int. Cl.⁵: **C10B 31/02**, B65G 69/18,
F16L 27/02

(21) Anmeldenummer: **90107392.4**

(22) Anmeldetag: **19.04.90**

(54) **Füllwagen für eine Koksofenbatterie.**

(30) Priorität: 26.05.89 DE 3917116

(43) Veröffentlichungstag der Anmeldung:
28.11.90 Patentblatt 90/48

(45) Bekanntmachung des Hinweises auf die
Patenterteilung:
27.11.91 Patentblatt 91/48

(84) Benannte Vertragsstaaten:
AT BE DE ES FR GB IT NL SE

(56) Entgegenhaltungen:
DE-A- 1 671 354
DE-A- 2 922 571
US-A- 2 057 125
US-A- 3 132 479

(73) Patentinhaber: HARTUNG, KUHN & CO.
MASCHINENFABRIK GMBH
Altendorfer Strasse 120
W-4300 Essen 1 (DE)

(72) Erfinder: Schröter, Horst
Berliner Höhe 68
W-4069 Viersen 1 (DE)

## Beschreibung

Die Erfindung betrifft einen Füllwagen zum Füllen von Kohle in die Ofenkammern einer Koksofenbatterie mit einem teleskopartig ausgebildeten Füllrohr, das mit seinem unteren Ende bis auf die Füllochrahmen der Füllöcher der Koksofenbatterie abgesenkt werden kann, wobei der untere Teil des Füllrohres in einem um eine waagerechte Achse schwenkbaren Tragring aufgehängt ist, der seinerseits von einem heb- und senkbaren Tragbügel gehalten wird.

Beim Betrieb eines Füllwagens ist es heute auf Grund der bestehenden Vorschriften für den Arbeits- und Umweltschutz unumgänglich, die beim Füllen der Ofenkammern entstehenden staub- und teerbeladenen Gase aufzufangen und in die Vorlage der Koksofenbatterie zu leiten. Diese Gase unterliegen während des Füllvorganges unterschiedlichen Bedingungen und können bei Überdruck oder ungenügendem Abzug zur Vorlage durch die Füllochöffnungen nach außen treten. Um dies zu verhindern, ist eine einwandfreie Abdichtung zwischen dem unteren Ende des Füllrohres und dem Fülllochrahmen, auf den das Füllrohr ja während des Füllvorganges aufgesetzt wird, erforderlich. In der Praxis kommt es jedoch insbesondere bei älteren Koksofenbatterien mit unebener Koksofendecke relativ häufig zu Positionierungsungenauigkeiten des Füllwagens, so daß dann die senkrechte Mittelachse des festen Füllstutzens des Kohlebehälters nicht mit der senkrechten Mittelachse des Fülloches bzw. des Füllochrahmens zusammenfällt und zwischen den beiden Mittelachsen ein mehr oder minder großer Versatz entsteht, der ein Ausmaß von einigen Zentimetern annehmen kann. Um dennoch eine einwandfreie Abdichtung zwischen dem Füllochrahmen und dem oberen Teil des Füllrohres herbeizuführen, ist es erforderlich, daß der untere Teil des Füllrohres eine dem Versatz entsprechende Schräglage einnimmt. Dies ist aber mit den bisher bekannten Konstruktionen nicht möglich.

Zwar wird in der DE-PS 2922571 ein Füllwagen beschrieben, bei dem der untere Teil des Füllrohres in einem um eine waagerechte Achse schwenkbaren Tragring aufgehängt ist, der seinerseits von einem heb- und senkbaren Tragbügel gehalten wird. Hierbei ist jedoch nur eine Schwenkbarkeit des unteren Teiles des Füllrohres in einer Richtung gegeben, und eine Pendelbewegung des Füllrohres soll bei dieser Konstruktion ausdrücklich vermieden werden. Daher können bei dieser Konstruktion beim Absenken des Füllrohres auf den Füllochrahmen halbmondförmige, vom Versatz abhängige Undichtigkeiten auftreten, durch die die Füllgase ungehindert entweichen können. Versucht man, diese Undichtigkeiten durch Gewaltanwendung zu beseitigen, so kann dies zu dauernden Schäden am gesamten Füllsystem führen.

Aufgabe der Erfindung ist es daher, den unteren Teil des Füllrohres so zu führen, daß er eine dem Versatz der senkrechten Mittelachsen von Füllrohr und Fülloch entsprechende Schräglage einnehmen und dabei eine einwandfreie Abdichtung erzielt werden kann.

Diese Aufgabe wird gelöst durch einen Füllwagen der eingangs genannten Art, der erfindungsgemäß dadurch gekennzeichnet ist, daß die Aufhängung des unteren Teiles des Füllrohres im Tragring durch zwei gegenüber liegende und an ihrem oberen und unteren Ende mit Gelenkköpfen versehene Gelenkarme erfolgt und der Tragring mittels zwei gegenüberliegenden Drehzapfen ebenfalls um eine waagerechte Achse schwenkbar am Tragbügel befestigt ist, wobei die Gelenkarme und die Drehzapfen um 90° zueinander versetzt angeordnet sind.

Durch diese Art der Aufhängung kann der untere Teil des Füllrohres eine kegelförmige, räumlich pendelnde Bewegung um seinen Aufhängungspunkt ausführen und damit die Schräglage einnehmen, die für eine einwandfreie Abdichtung von Füllrohr und Fülloch erforderlich ist. Für eine einwandfreie Abdichtung zwischen dem oberen und unteren Teil des Füllrohres sowie zwischen dem unteren Teil des Füllrohres und dem Füllochrahmen ist es hierbei vorteilhaft, wenn die Dichtringe am oberen und unteren Ende des unteren Teils des Füllrohres in Form einer Kugelschicht ausgebildet sind. Dadurch können sich diese Dichtringe in jeder Lage des unteren Teiles des Füllrohres sowohl an den Dichtrahmen am Auslauf des oberen Teiles des Füllrohres als auch an den Füllochrahmen genau anpassen und damit eine einwandfreie Abdichtung gewährleisten.

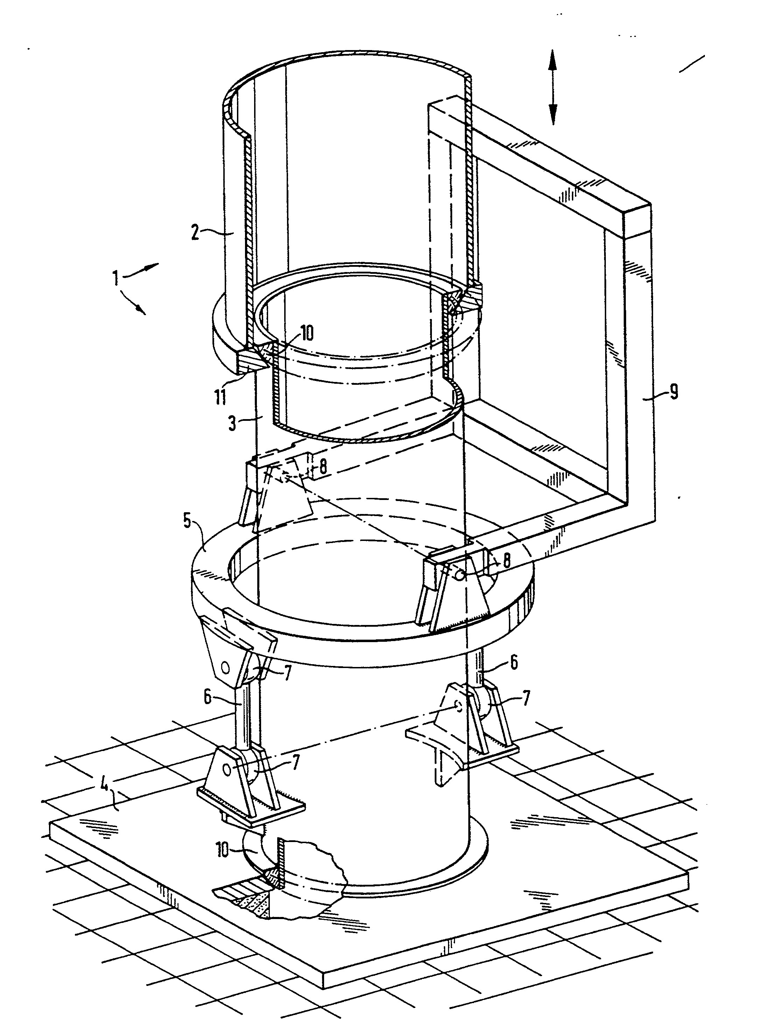

Weitere Einzelheiten der erfindungsgemäßen Konstruktion sollen nachfolgend an Hand der Abbildung erläutert werden. Diese zeigt in perspektivischer Darstellung das Füllrohr mit der dazugehörigen Aufhängungsvorrichtung.

Das Füllrohr 1 ist hierbei teleskopartig aus einem oberen Teil 2 und einem unteren Teil 3 zusammengesetzt und befindet sich unterhalb des unbeweglichen Füllstutzens des Kohlebehälters, wobei der obere Teil 2 mit seinem oberen Ende den Füllstutzen umschließt. Der Kohlebehälter mit dem dazugehörigen Füllstutzen sowie weitere Einzelheiten des Füllwagens sind in der Abbildung nicht dargestellt, da sie für die Erläuterung der vorliegenden Erfindung ohne Bedeutung sind. Es kann sich hierbei um zum Stande der Technik gehörende Ausführungsformen dieser Teile handeln. Der Kohlebehälter mit dem dazugehörigen Füllstutzen ist in jedem Falle oberhalb des Füllrohres 1 angeordnet, so daß die Kohle unter dem Einfluß der Schwerkraft durch das Füllrohr 1 in die darunter liegende Ofenkammer der Koksofenbatterie fließen kann. Der untere Teil 3 des Füllrohres 1 wird hierzu auf den Füllochrahmen 4 abgesenkt. Zu diesem Zweck ist der untere Teil 3 mittels der beiden gegenüber liegenden Gelenkarme 6 im Tragring 5 aufgehängt. Die Gelenkarme 6 weisen jeweils an ihrem oberen und unteren Ende die kugelförmig ausgebildeten Gelenkköpfe 7 auf, die für die gewünschte Beweglichkeit des unteren Teiles 3 erforderlich sind. Der Tragring 5 seinerseits ist mittels der beiden gegenüber liegenden Drehzapfen 8 am Tragbügel 9 befestigt und um die waagerechte Achse schwenkbar. Der Tragbügel 9 ist heb- und senkbar, was in der Abbildung durch den Doppelpfeil angedeutet wird. Durch die entsprechende Bewegung des Tragbügels 9 kann deshalb der untere Teil 3 des Füllrohres 1 auf den Füllochrahmen 4 abgesenkt oder von diesem abgehoben werden. Erfindungsgemäß ist vorgesehen, daß die Gelenkarme 6 und die Drehzapfen 8 um 90° zueinander versetzt angeordnet sind, was auch auf der Abbildung zu erkennen ist. Am oberen und unteren Ende des unteren Teiles 3 ist je ein Dichtring 10 angeordnet, der vorzugsweise in Form einer Kugelschicht ausgebildet ist. Diese Dichtringe 10 sorgen in jeder Lage des unteren Teiles 3 für die erforderliche Abdichtung zum Füllochrahmen 4 sowie zum Dichtrahmen 11 des oberen Teiles 2 des Füllrohres 1.

Selbstverständlich können in der Praxis auch gewisse Abweichungen der in der Abbildung dargestellten Ausführungsform der Erfindung vorgenommen werden. So können beispielsweise der Tragring 5 und der Tragbügel 9 eine andere Form aufweisen. Entscheidend ist jedoch, daß in jedem Falle die Gelenkarme 6 und die Drehzapfen 8 um 90° zueinander versetzt angeordnet sind.

## Patentansprüche

1. Füllwagen zum Füllen von Kohle in die Ofenkammern einer Koksofenbatterie mit einem teleskopartig ausgebildeten Füllrohr, das mit seinem unteren Ende bis auf die Füllochrahmen der Füllöcher der Koksofenbatterie abgesenkt werden kann, wobei der untere Teil des Füllrohres in einem um eine waagerechte Achse schwenkbaren Tragring aufgehängt ist, der seinerseits von einem heb- und senkbaren Tragbügel gehalten wird, dadurch gekennzeichnet, daß die Aufhängung des unteren Teiles (3) des Füllrohres (1) im Tragring (5) durch zwei gegenüber liegende und an ihrem oberen und unteren Ende mit Gelenkköpfen (7) versehene Gelenkarme (6) erfolgt und der Tragring (5) mittels zwei gegenüber liegenden Drehzapfen (8) ebenfalls um eine waagerechte Achse schwenkbar am Tragbügel (9) befestigt ist, wobei die Gelenkarme (6) und die Drehzapfen (8) um 90° zueinander versetzt angeordnet sind.

2. Füllwagen nach Anspruch 1, dadurch gekennzeichnet, daß der untere Teil (3) des Füllrohres (1) an seinem oberen und unteren Ende Dichtringe (10) aufweist, die in Form einer Kugelschicht ausgebildet sind.

3. Füllwagen nach den Ansprüchen 1 und 2, dadurch gekennzeichnet, daß die an den Gelenkarmen (6) befindlichen Gelenkköpfe (7) kugelförmig ausgebildet sind.

## Claims

1. Larry truck for charging coal into the oven chambers of a battery of coke ovens, having a telescopically designed charging pipe which can be lowered with its lower end onto the charging hole frames of the charging holes of the battery of coke ovens, the lower part of the charging pipe being suspended from a carrying ring which can pivot about a horizontal axis and which is in turn held by a carrying frame which can be raised and lowered, characterized in that the lower part (3) of the charging pipe (1) is suspended from the carrying ring (5) by two opposite articulated arms (6), provided at their upper and lower end with articulated heads (7), and the carrying ring (5) is fastened to the carrying frame (9) by means of two opposite trunnions (8) so that it may also pivot about a horizontal axis, the articulated arms (6) and the trunnions (8) being arranged offset by 90° to each other.

2. Larry truck according to Claim 1, characterized in that the lower part (3) of the charging pipe (1) has sealing rings (10) at its upper and lower ends which are designed in the shape of a spherical segment between two parallel circles.

3. Larry truck according to Claims 1 and 2, characterized in that the articulated heads (7) situated on the articulated arms (6) are designed spherically.

## Revendications

1. Chariot de chargement qui, prévu pour charger de la houille dans les chambres d'une batterie de fours à coke, comporte un tube de chargement qui est réalisé télescopique et dont l'extrémité inférieure peut être descendue jusque sur les cadres des bouches de chargement de la batterie de fours à coke, la partie inférieure du tube de chargement étant suspendue dans un anneau porteur qui peut osciller autour d'un axe horizontal et est maintenu à son tour dans un arceau porteur pouvant être relevé et abaissé, caractérisé par le fait que la suspension de la partie inférieure (3) du tube (1) de chargement dans l'anneau porteur (5) est réalisée par l'intermédiaire de deux bras (6) d'articulation diamétralement opposés et munis chacun, à leurs extrémités haute et basse, d'un joint (7) articulé et par le fait que l'anneau porteur (5) est fixé à l'arceau porteur (9) de manière oscillante autour d'un axe également horizontal au moyen de deux tourillons (8) diamétralement opposés, tandis que les bras (6) d'articulation et les tourillons (8) sont disposés avec un décalage de 90° les uns par rapport aux autres.

2. Chariot de chargement suivant la revendication 1, caractérisé par le fait qu'à ses extrémités haute et basse, la partie inférieure (3) du tube (1) de chargement présente des anneaux (10) assurant l'étanchéité qui sont réalisés avec la forme d'une calotte sphérique.

3. Chariot de chargement suivant les revendications 1 et 2, caractérisé par le fait que les joints (7) articulés se trouvant sur les bras (6) d'articulation sont réalisés sous la forme de rotules.